# EUROPÄISCHE PATENTANMELDUNG

(11) **EP 4 163 621 A1**
(43) Veröffentlichungstag der Anmeldung: **12.04.2023**
(21) Anmeldenummer: 21201873.3
(22) Anmeldetag: 11.10.2021
(51) Int. Cl.: G01N 21/31, G01N 21/359

(54) **OPTISCHES VEGETATIONSINDEX MONITORING**

(71) Anmelder: Siemens Aktiengesellschaft, 80333 München (DE)
(72) Erfinder: Gigler, Alexander Michael, 86836 Untermeitingen (DE); Strzoda, Rainer, 81825 München (DE)
(74) Vertreter: Siemens Patent Attorneys

(57) **Zusammenfassung**

Die Erfindung gibt eine Vorrichtung zur Beleuchtung eines Objekts (6) für eine spektroskopische Messung an, aufweisend:
- einen an ein Mobiltelefon (5) fixierbaren Grundkörper (1), wobei der Grundkörper (1) derart ausgebildet ist, dass mindestens eine Hauptkamera (5.1) des Mobiltelefons (5) freie Sicht auf das Objekt (6) hat,
- eine in dem Grundkörper (1) angeordnete in Aufnahmerichtung der Hauptkamera strahlende und schaltbare Beleuchtungseinheit (2), wobei mindestens ein Wellenlängenbereich der Beleuchtungseinheit (2) für die spektroskopische Messung ausgebildet ist.

Die Erfindung gibt auch eine Anordnung mit einer derartigen Vorrichtung und einem Mobiltelefon sowie ein Verfahren zur Bestimmung eines Vegetationsindex mit einer derartigen Anordnung an.

## Beschreibung

### GEBIET DER ERFINDUNG

Die Erfindung betrifft eine Vorrichtung zur Beleuchtung eines Objekts für eine spektroskopische Messung. Die Erfindung betrifft auch eine Anordnung mit einer derartigen Vorrichtung und einem Mobiltelefon sowie ein Verfahren zur Messung eines Vegetationsindex mit einer derartigen Anordnung.

### HINTERGRUND DER ERFINDUNG

In der Landwirtschaft ist es von hohem ökonomischem und ökologischem Interesse, den Gesundheitszustand der angebauten Kulturen möglichst unkompliziert erfassen und Unregelmäßigkeiten möglichst in einem frühen Stadium erkennen zu können. Pflanzenkrankheiten, Schädlingsbefall und inadäquate Düngung vermindern den Ertrag und die Qualität der angebauten Feldfrucht. Frühzeitig eingeleitete Maßnahmen führen zu einer gezielten Düngung und dem minimalen Einsatz von Herbiziden, Fungiziden und Pestiziden.

Die spektral aufgelöste optische Messung der Lichtreflektion an Blättern erlaubt in vielen Fällen einen Rückschluss auf den Versorgungszustand der Pflanze bzw. Pflanzenkrankheiten. Spektralmessungen werden im Labormaßstab und zunehmend auch im Feld eingesetzt. Neben der Punktmessung wird auch zunehmend hyperspektral messende Sensorik (HSI = Hyperspektral Imaging) eingesetzt. Der bevorzugte Wellenlängenbereich umfasst dabei das sichtbare Licht (VIS = Visible) und den Nahinfrarotbereich (NIR = Near Infrared) von 400 bis 1500 nm.

Die hohen Kosten für die HSI-Messtechnik stehen einer breiten Anwendung in der Landwirtschaft entgegen.

Die offenbarte kompakte, kostengünstige Sensorik versetzt den Landwirt in die Lage den Gesundheitszustand seiner Kulturen auf einfache Art und Weise selbst und so oft wie gewünscht zu kontrollieren.

Klassische optische Spektroskopie wird seit langer Zeit zur Untersuchung von Pflanzenkrankheiten (z.B. Blattkrankheiten) und der Untersuchung des Versorgungsgrades von Pflanzen eingesetzt. Klassische optische Spektroskopie umfasst hierbei die Verwendung von natürlichen oder künstlichen Lichtquellen (Sonne, Glühstrahler), die das zu untersuchende Objekt bestrahlen, die Anwendung eines Spektralapparates, der die Aufzeichnung einer Wellenlängen-abhängigen reflektierten Intensität erlaubt. Aus den spektralen Signaturen wird der gewünschte Vegetationsindex (VI) berechnet und dem Bediener angezeigt.

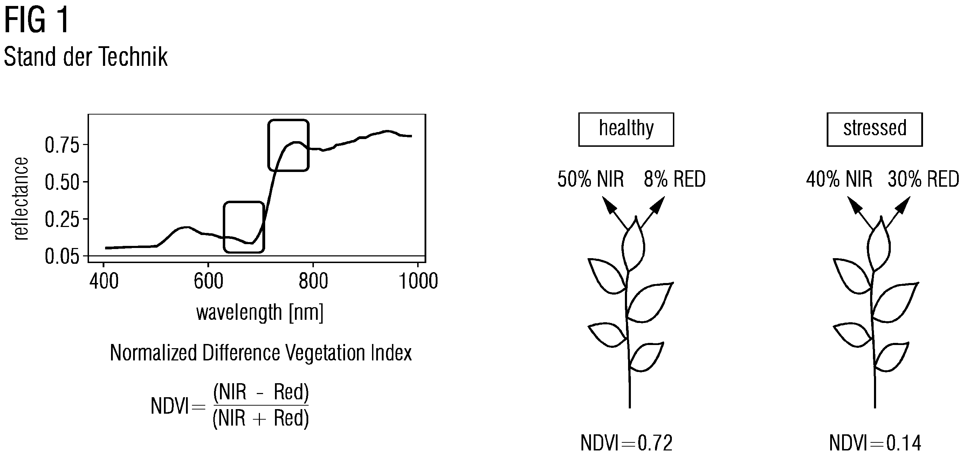

Vegetationsindizes sind aus Erfahrung eingeführte numerische Parameter, mit denen man den Zustand von Pflanzen charakterisieren kann. Vegetationsindizes errechnen sich aus Verhältnissen von Intensitäten im Reflexionsspektrum bei ausgewählten Wellenlängen. Einer der bekanntesten VIs ist der NDVI (Normalized Difference Vegetations Index, FIG. 1)), der sich nach der Formel in der FIG. 1 berechnet. Er beschreibt ein Maß für den Stress, unter dem eine Pflanze steht. Dabei kann der Stress verschiedene Ursachen haben, wie z.B. Trockenheit, Mangelernährung oder Krankheit.

In neuerer Zeit kam zur beschriebenen Punktmessung die lokal aufgelöste Messung, die eine hyperspektrale Bildgebung ermöglicht. Der Punktdetektor des Spektralapparates wird dabei durch ein zweidimensionales Detektor-Array ersetzt. Damit kann ein VI-Bild der Objektoberfläche erstellt werden, welches die gesucht Information enthält. Dieses Prinzip wird in verschiedenen Variationen im Stand der Technik beschrieben und in kommerziell erhältlichen Geräten umgesetzt.

Kommerzielle Lösungen sind beispielsweise:
Im Greenseeker werden LEDs mit Emissionswellenlängen im VIS (656 nm) und NIR (774nm) zur Beleuchtung des Objekts eingesetzt. Damit ist der Spektralapparat in die Lichtquelle verlagert. Ein Silizium-basierter Ein-Kanal-Detektor registriert das vom Objekt reflektierte Licht. Die Auswertung nach dem VI erfolgt in einer proprietären Recheneinheit.

Der Isaria VI-Sensor funktioniert im Prinzip wie der Greenseeker mit dem Unterschied, dass vier LEDs unterschiedlicher Wellenlängen zum Einsatz kommen und damit verschiedene VIs berechnet werden können.

LDP LLC-MAXMAX.COM bietet einen abbildenden VI-Sensor für die Fernerkundung (remote sensing) an. Der Sensor basiert auf einem Mobiltelefon (Samsung Galaxy S4 zoom), bei dem die drei Farbkanäle der normalen VIS-Kamera modifiziert sind. Im Color Filter Array auf dem Bildsensor der Kamera sind die drei Farbkanäle an die für VIs relevanten Absorptionsbanden angepasst, in einer Variante z.B. auf den normalen Rot- und Grünbereich und der nominelle Blaukanal detektiert Licht im NIR-Bereich von 800 - 900 nm. Als Lichtquelle für die Reflexionsmessung wird die Sonne verwendet.

Kitic, et al., "A new low-cost portable multispectral optical device for precise plant status assessment" in Computers and Electronics in Agriculture, Volume 162, July 2019, Pages 300-308 beschreibt analog zum Greenseeker ein Handgerät mit vier LEDs unterschiedlicher Wellenlänge und einer Silizium Fotodiode als Detektor.

B. Grieve, et al., "Localized multispectral crop imaging sensors: Engineering & validation of a cost effective plant stress and disease sensor," 2015 IEEE Sensors Applications Symposium (SAS), 2015, pp. 1-6 beschreibt einen stationären Laboraufbau mit einer Vielzahl von LEDs mit fünf Wellenlängen, die auf einer Fläche mit einer Kantenlänge von 30 - 40 cm verteilt sind, um eine homogene Beleuchtung über eine größere Fläche sicherzustellen. Zur Bildgebung wird eine handelsübliche Digitalkamera der Firma Canon eingesetzt

Beisel, et al., 2018, "Utilization of single- image normalized difference vegetation index (SI- NDVI) for early plant stress detection", Applications in Plant Sciences 6(10) beschreibt einen Aufbau, bei dem der Spektralapparat durch zwei optische Filter mit den Wellenlängenbereichen 400-575-nm und 675-775-nm ersetzt ist. Zur Beleuchtung wird eine separate Lichtquelle aus LEDs mit vier verschiedenen Wellenlängen (450 nm, 660 nm, 735 nm und 5700 K (weiß) LEDs.) eingesetzt. Zur Bildgebung wird eine kommerziell erhältliche Kamera der Firma GoPro eingesetzt.

Eine Lösung mit Mobiltelefon wird von Chung, et al., "Smartphone near infrared monitoring of plant stress", Computers and Electronics in Agriculture, Volume 154, 2018, Pages 93-98 angegeben. Dabei wird als Lichtquelle die Sonne verwendet. Der Spektralapparat ist in diesem Fall durch einem Langpassfilter realisiert (>800 nm), das vor der Optik der integrierten Kamera platziert wird. Zwei Messungen, mit und ohne Filter ergeben angenähert die Reflektivität für den NIR-Bereich (>800 nm) und den VIR&NIR-Bereich. Damit wird ein angenäherter VI (NDVI) ermittelt.

Kaile K, Godavarty A., "Development and Validation of a Smartphone-Based Near-Infrared Optical Imaging Device to Measure Physiological Changes In-Vivo", Micromachines (Basel), 2019; 10(3):180, Published 2019 Mar 9 beschreibt einen bildgebenden Aufbau mit Mobiltelefon und drei LEDs (690, 800 and 840 nm) zur Beleuchtung. Der Einsatz der Sensorik ist allerdings auf medizinische Anwendungen beschränkt. Das spiegelt sich auch in der Auswahl der Beleuchtungswellenlängen wider, die für die Untersuchung von Pflanzen nicht geeignet sind.

Die Technik der beiden oben beschriebenen kommerziellen Lösungen sind in den Offenlegungsschriften US 2006/0208171 A1 und DE 10 2009 052 159 A1 offenbart.

In der Offenlegungsschrift US 2013/0217439 A1 wird ein Mobiltelefon-basierten NDVI-Sensor offenbart, wobei der Spektralapparat mit zwei optischen Filtern vor dem Objektiv der integrierten Kamera realisiert wird. Die beiden Filter werden entweder abwechselnd vor dem Objektiv platziert oder bilden das Objekt nach Wellenlänge getrennt auf zwei unterschiedliche Bereiche des Bildsensors ab.

### ZUSAMMENFASSUNG DER ERFINDUNG

Es ist Aufgabe der Erfindung, eine Lösung anzugeben, mit deren Hilfe spektroskopisch der Gesundheitszustand von Pflanzen ermittelt werden kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung offenbart einen kostengünstigen Sensoraufbau aufweisend eine Kombination von Mobiltelefon und optischer Beleuchtungseinheit zur Beurteilung des Pflanzenzustands.

Die offenbarte Vorrichtung zur Bestimmung des Zustands einer Pflanze anhand spektraler Bildgebung mit aktiver Beleuchtung, z.B. in Form von LEDs verschiedener Wellenlängen unter Nutzung der Kamera eines Mobiltelefons zur Bilderfassung ist weder kommerziell erhältlich noch im Stand der Technik offenbart.

Die Vorteile der offenbarten Lösung sind:
Auf Basis eines Mobiltelefons als weltweit massenhaft verbreiteter Technologieplattform kann der Pflanzensensor kostengünstig realisiert werden.

Als Add-on wird der Pflanzensensor bei Bedarf mit dem Mobiltelefon kombiniert, z.B. in Form einer Schale, in die das Mobiltelefon eingelegt wird. Damit ergibt sich eine kompakte Bauform, die eine unkomplizierte Handhabung ermöglicht und damit die Akzeptanz fördert. Auf störanfällige elektrische Verbindungen kann verzichtet werden, wenn die Kommunikation zwischen Add-on und Mobiltelefon und die Energieversorgung (induktives Laden) drahtlos erfolgen.

Das Mobiltelefon stellt alle zum Betrieb des Pflanzensensors als Add-on benötigten Module zur Verfügung, z.B. Kamera, Recheneinheit, Stromversorgung über USB oder induktives Laden, GPS zur Positionsbestimmung. Darüber hinaus sind alle benötigten Kommunikationskanäle zwischen Sensor und Mobiltelefon z.B. USB, WLAN, Bluetooth, NFC vorhanden.

Zur Übermittlung von Messergebnissen an eine zentrale Datenbank bzw. Parametern für die Messung von der Datenbank an den Sensor steht der Anschluss an das Mobilfunknetz zur Verfügung.

Moderne Mobiltelefone stellen genügend Rechenleistung für die Verarbeitung der hyperspektralen Bilder zu Abbildungen, z.B. zur Darstellung des Vegetationsindex, zur Verfügung. Bei Verwendung mehrerer Wellenlängen steht auch die Möglichkeit offen, aus den einzelnen Spektren mit Methoden der KI weitergehende Informationen zu extrahieren z.B. den Düngezustand, Pflanzenkrankheiten bzw. den Schweregrad der Krankheit. Darüber hinaus kann auch die ortsaufgelöste Information zur Identifikation von Krankheiten mit inhomogen verteiltem Auftreten genutzt werden (Blattfleckenkrankheiten).

Die Erfindung offenbart eine Vorrichtung zur Beleuchtung eines Objekts für eine spektroskopische Messung, aufweisend
- einen an ein Mobiltelefon fixierbaren, zum Beispiel klemmbaren, Grundkörper, wobei der Grundkörper derart ausgebildet ist, dass mindestens eine Hauptkamera des Mobiltelefons freie Sicht auf das Objekt hat, und
- eine in dem Grundkörper angeordnete in Aufnahmerichtung der Hauptkamera strahlende schaltbare Beleuchtungseinheit, wobei mindestens ein Wellenlängenbereich der Beleuchtungseinheit für die spektroskopische Messung ausgebildet ist.

In einer Weiterbildung ist der Grundkörper als mit dem Mobiltelefon auf der Seite der Hauptkamera klemmbaren Schale ausgebildet.

In einer weiteren Ausführungsform weist die Beleuchtungseinheit mindestens zwei LEDs auf.

In einer weiteren Ausgestaltung kann der Wellenlängenbereich das sichtbare rote Licht und das nahe Infrarot umfassen.

In einer weiteren Ausgestaltung kann die Beleuchtungseinheit in einem vorgegebenen Wellenlängenbereich durchstimmbar sein.

In einer Weiterbildung können eine in dem Grundkörper angeordnete Batteriespeichereinheit und/oder induktive Stromübertragungseinheit ausgebildet sein.

In einer weiteren Ausgestaltung kann eine Bluetooth Sende- und Empfangseinheit ausgebildet sein, um die Beleuchtungseinheit aus der Ferne zu steuern. Dadurch kann die Vorrichtung vorzugsweise "remotely" durch ein Mobiltelefon steuerbar sein.

Die Erfindung offenbart auch eine Anordnung mit einer erfindungsgemäßen Vorrichtung und einem Mobiltelefon, mit dem die Vorrichtung lösbar verbunden ist.

In einer Weiterbildung kann zwischen der Vorrichtung und dem Objekt ein Tubus angeordnet sein, wobei der Tubus ausgebildet ist, den Strahlengang der Beleuchtungseinheit und der Hauptkamera aufzunehmen.

In einer Weiterbildung kann die Anordnung derart ausgebildet sein, dass die Energieversorgung der Beleuchtungseinrichtung induktiv durch das Mobiltelefon erfolgt.

Die Erfindung offenbart schließlich auch ein Verfahren zur Ermittlung eines Vegetationsindex einer Pflanze mit einer erfindungsgemäßen Anordnung, wobei das Mobiltelefon die Steuerung und die Ermittlung des Vegetationsindex durchführt.

In einer Weiterbildung kann das Mobiltelefon Bilder mit und ohne aktive Beleuchtungseinheit aufnehmen und die so ermittelte Hintergrundbeleuchtung rechnerisch von Bildern mit aktiver Beleuchtungseinheit abziehen.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 die Berechnung des Normalized Difference Vegetation Index gemäß Stand der Technik,
FIG. 2 eine Schnittansicht der Anordnung zur Bestimmung eines Vegetationsindex und
FIG. 3 ein Blockschaltbild einer Anordnung zur Bestimmung eines Vegetationsindex.

### DETAILLIERTE BESCHREIBUNG DER ERFINDUNG

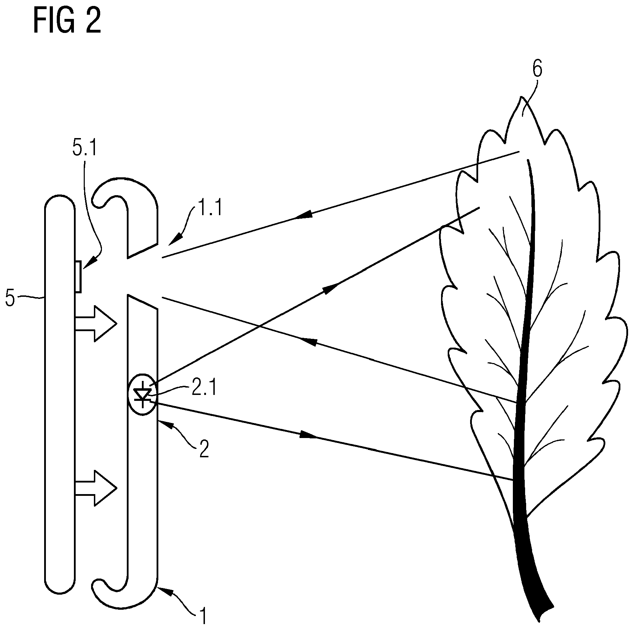

FIG. 2 zeigt eine Schnittansicht der offenbarten Lösung. Der dargestellt Aufbau umfasst einen Grundkörper 1 und eine darin angeordnete Beleuchtungseinheit 2, die ein Objekt 6, z.B. ein Blatt einer Pflanze, mit Licht unterschiedlicher Wellenlängenbereiche in geeigneter (zeitlicher) Abfolge beleuchtet und die Hauptkamera 5.1 des Mobiltelefons 5, die das vom Objekt 6 reflektierte Licht erfasst und bei geeigneter Synchronisation zwischen Beleuchtungseinheit 2 und Aufnahme von Bildern der unterschiedlichen Wellenlängen generiert. Der Grundkörper weist eine Öffnung 1.1 auf, durch die die Hauptkamera 5.1 "schauen" kann.

Bei der Beleuchtungseinheit 2 handelt es sich vorzugsweise um eine kontinuierlich oder in diskreten Schritten durchstimmbare Lichtquelle mit gegebener optischer Bandbreite, die den spektralen Erfassungsbereich von den typischerweise in Mobiltelefonen 5 eingebauten Silizium CCDs ganz oder teilweise überstreicht. Bevorzugt ist die Wellenlängenauflösung der Beleuchtungseinheit 2 der spektralen Variabilität der Spektren angepasst. Im einfachsten Fall handelt es sich um einen Satz zweier LEDs 2.1 unterschiedlicher an die Sensorik-Aufgabe angepasster Wellenlängen.

Es können auch mehr als zwei LEDs 2.1 eingesetzt werden, um z.B. ein Spektrum zu erzeugen oder verschiedene VI Erfassungen realisieren zu können. Statt LEDs 2.1 können auch Laser wie z.B. Laserdioden eingesetzt werden oder eine Lichtquelle, die eine spektrale Intensitätsmodulation erlaubt, wie beispielsweise in der Offenlegungsschrift WO 2016/173661 A1 dargelegt.

Hauptkameras 5.1 in Mobiltelefonen 5 liefern üblicherweise ein Rot-Grün-Blau-Bild (RGB-Bild) des Objekts 6. Die Realisierung erfolgt in der Regel mit einem Farbfilter-Array (Bayerfilter), das jedem Pixel des Bildsensors der Hauptkamera 5.1 einen definierten Wellenlängenbereich zuordnet. Häufig umfasst der Filterbereich für die roten Farbtöne auch den Nahinfrarotbereich bis ca. 1000 nm. Bei Verwendung von zwei oder drei LEDs 2.1, die jeweils nur in einem Filterbereich emittiert (rot, grün oder blau), kann die Messung des VI simultan mit einer einzigen Aufnahme erfolgen, was die Ausführung der Aufnahme vereinfacht und robust gegen Verwackeln macht.

Wenn zwei oder mehr Wellenlängen in einem Farbkanal detektiert werden sollen, müssen die Aufnahmen für die entsprechenden Wellenlängen zeitlich nacheinander durchgeführt werden.

Hauptkameras 5.1, deren Rot Kanal nicht den NIR-Bereich überstreicht sind ungeeignet, wenn eine NIR-Wellenlänge ausgewertet werden muss, es sei denn, die Hauptkamera 5.1 verfügt über einen eigenen NIR-Bildsensor oder einen Wellenlängenunabhängigen Bildsensor.

Der Arbeitsabstandsbereich erstreckt sich vom minimalen Abstand, bei dem die Hauptkamera 5.1 noch fokussieren kann (Zentimeterbereich) bis zu einem Abstand, bei dem die Beleuchtungseinheit 2 in der Lage ist, nach Reflexion am Objekt 6 noch genügend Lichtintensität zu liefern, um eine Aufnahme mit einem ausreichenden Signal-zu-Rauschabstand zu gewährleisten.

Zur Intensitätskorrektur der Rohbilder kann man wie üblich bei spektral zu bewertenden Messverfahren vor der eigentlichen Messung eine Dunkel- und eine Weißreferenz aufnehmen. Bei der Synchronisation der Beleuchtungseinheit 2 mit der Bildaufnahme kann man in geeigneter Abfolge (z.B. abwechselnd) Bilder mit und ohne aktive Beleuchtung aufnehmen und damit die Hintergrundbeleuchtung rechnerisch abziehen.

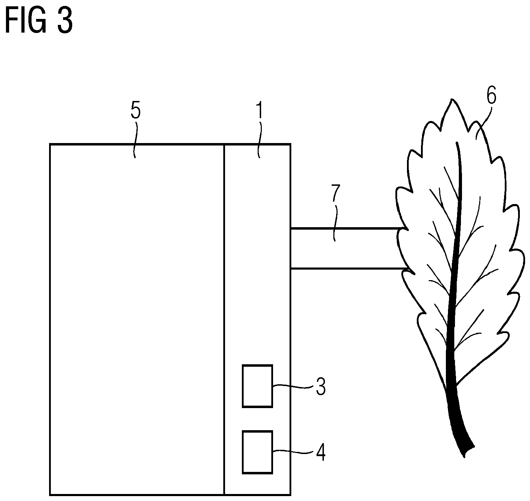

In einer Variante kann man das Hintergrundlicht auch durch Einsatz eines Tubus 7 (siehe FIG. 3) zwischen Mobiltelefon und dem zu messenden Objekt 6 abschatten. Die objektseitige Öffnung des Tubus 7 wird während der Messung mit dem zu messenden Objekt 6 abgedeckt (z.B. Blatt). Hinter dem zum messenden Objekt 6 kann zusätzlich eine Abdeckung verwendet werden, die bei transparenten Objekten 6 das durchscheinende Hintergrundlicht eliminiert. Die beiden Varianten zur Eliminierung des Hintergrundlichts können auch in Kombination angewandt werden.

FIG. 3 zeigt des Weiteren eine induktive Stromübertragungseinheit 3 sowie ein Bluetooth Sende- und Empfangseinheit 4 in dem Grundkörper 1.

Die Berechnung der "VI-Bilder" erfolgt zweckmäßigerweise in der Recheneinheit des Mobiltelefons. Damit kann dem Benutzer sofort das Ergebnis der Messung gezeigt werden. Moderne Mobiltelefone 5 verfügen über genügend Rechenleistung, um z.B. die Steuerung der Messung und die Datenauswertung zu übernehmen. Darüber hinaus stehen verschiedene Module (z.B. GPS) und Funkkanäle zur Verfügung, um die ausgewerteten Daten sowie für die Messung wichtige Parameter (Pflanzensorte, spektral Merkmale verschiedener Pflanzenkrankheiten für die Messung, usw.) mit einer zentralen Datenbank auszutauschen zu können.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Grundkörper
- 1.1: Öffnung für Hauptkamera 5.1
- 2: Beleuchtungseinheit
- 2.1: LED
- 3: Stromübertragungseinheit
- 4: Bluetooth Sende - und Empfangseinheit
- 5: Mobiltelefon
- 5.1: Hauptkamera
- 6: Objekt (z.B. Blatt)
- 7: Tubus

## Patentansprüche

1. Vorrichtung zur Beleuchtung eines Objekts (6) für eine spektroskopische Messung,
**gekennzeichnet durch**:
- einen an ein Mobiltelefon (5) fixierbaren Grundkörper (1), wobei der Grundkörper (1) derart ausgebildet ist, dass mindestens eine Hauptkamera (5.1) des Mobiltelefons (5) freie Sicht auf das Objekt (6) hat,
- eine in dem Grundkörper (1) angeordnete in Aufnahmerichtung der Hauptkamera strahlende und schaltbare Beleuchtungseinheit (2), wobei mindestens ein Wellenlängenbereich der Beleuchtungseinheit (2) für die spektroskopische Messung ausgebildet ist.

2. Vorrichtung nach Anspruch 1,
**dadurch gekennzeichnet,**
**dass** der Grundkörper (1) als mit dem Mobiltelefon (4) auf der Seite der Hauptkamera (5.1) klemmbaren Schale ausgebildet ist.

3. Vorrichtung nach Anspruch 1 oder 2,
**dadurch gekennzeichnet,**
**dass** die Beleuchtungseinheit (2) mindestens zwei LEDs (2.1) aufweist.

4. Vorrichtung nach einem der vorhergehenden Ansprüche, **dadurch gekennzeichnet,**
**dass** der Wellenlängenbereich das sichtbare rote Licht und das nahe Infrarot umfasst.

5. Vorrichtung nach einem der Ansprüche 1 bis 3,
**dadurch gekennzeichnet,**
**dass** die Beleuchtungseinheit (2) in einem vorgegebenen Wellenlängenbereich durchstimmbar ist.

6. Vorrichtung nach einem der vorhergehenden Ansprüche, **gekennzeichnet durch**:
- eine in dem Grundkörper (1) angeordnete Batteriespeichereinheit und/oder induktive Stromübertragungseinheit (3).

7. Vorrichtung nach einem der vorhergehenden Ansprüche, **gekennzeichnet durch**:
- eine Bluetooth Sende- und Empfangseinheit (4) ausgebildet, die Beleuchtungseinheit (2) aus der Ferne zu steuern.

8. Anordnung mit einer Vorrichtung nach einem der vorhergehenden Ansprüche,
**gekennzeichnet durch**:
- ein Mobiltelefon (5), mit dem die Vorrichtung lösbar verbunden ist.

9. Anordnung nach Anspruch 8,
**gekennzeichnet durch**:
- einen zwischen der Vorrichtung und dem Objekt (6) angeordneten Tubus (7), wobei der Tubus (7) ausgebildet ist, den Strahlengang der Beleuchtungseinheit (2) und der Hauptkamera (5.1) aufzunehmen.

10. Anordnung nach einem der vorhergehenden Ansprüche, derart ausgebildet, dass die Energieversorgung der Beleuchtungseinheit (2) induktiv durch das Mobiltelefon (5) erfolgt.

11. Verfahren zur Ermittlung eines Vegetationsindex einer Pflanze (6) mit einer Anordnung nach einem der Ansprüche 8 bis 10,
**dadurch gekennzeichnet,**
**dass** das Mobiltelefon (5) die Steuerung und die Ermittlung des Vegetationsindex durchzuführt.

12. Verfahren nach Anspruch 11,
**dadurch gekennzeichnet,**
**dass** das Mobiltelefon (5) Bilder mit und ohne aktive Beleuchtungseinheit (2) aufnimmt und die so ermittelte Hintergrundbeleuchtung rechnerisch von Bildern mit aktiver Beleuchtungseinheit abzieht.
